# EUROPEAN PATENT APPLICATION

(11) **EP 2 905 606 A1**
(43) Date of publication of application: **12.08.2015**
(21) Application number: 14154226.6
(22) Date of filing: 07.02.2014
(51) Int. Cl.: G01N 21/77, G01N 21/45

(54) **Device for detection of a light modifying target substance, method for detection of a target substance, and use of an optical glass for detection of a target substance**

(71) Applicant: QIAGEN Lake Constance GmbH, 78333 Stockach (DE)
(72) Inventor: Elmar Christian Feuerbacher, 78462 Konstanz (DE)
(74) Representative: König, Gregor Sebastian

(57) **Abstract**

Device for detection of a light modifying target substance, the device comprising at least one optical waveguide (1) with a side surface (3), the side surface (3) comprising a biosensor that is adapted to contact the target substance, and a device for measuring light intensity (7), the device (7) being positioned in a beam reflected by the side surface (3) in order to detect an intensity of light modified by the target substance in contact with the biosensor.

## Description

The invention pertains to the field of detection of a light modifying target substance, especially to the detection of the amount of the target substance in a fluid (concentration), preferably a liquid.

US 2012/0058569 A1 discloses a method and device for determining optical properties by measuring intensities on a thin layer. As incident light, either a single wavelength is, or several spectrally spaced apart and thus individually different wavelengths are, simultaneously or sequentially, incident on the thin layers to be tested and measured. Changes in the optical thickness are computed from the spectral position of the interference extremes and their mutual spacing. A shift in the interference pattern can be observed. The optical layer thickness can also be determined from the change in the intensity at one or several wavelengths. US 2012/0058569 A1 discloses to measure intensities on a thin layer, wherein light is incident on at least one partially transparent carrier comprising the thin layer. At least one region on the surface of the thin layer comprises receptor molecules with specific and/or non-specific binding effects. The thin layer is affected by the sample to be tested because the interaction of the receptor molecules on the thin layer with the corresponding species in the sample causes a change in the layer thickness in the region of the interaction. The change in layer thickness, in turn, affects the light that is incident on the carrier and that is reflected at the surface of the thin layer. The intensity of light reflected at the surface of the thin layer is subsequently detected by the detector arrangement.

Although the device and method disclosed in US 2012/0058569 A1 obtains good results, the configuration is complex.

The object of the present invention is to provide a suitable device and method for detection of a target substance which is simpler.

This object is solved by the subject-matter of the independent claims.

The present invention is based on the finding that an optical waveguide comprising a biosensor on its side surface, the biosensor being selected in accordance with a target substance to be detected, can be used and that light intensity of the light coupled into the optical waveguide and reflected at the side surface can be determined as a measure for the presence of target substance, especially the amount of the target substance (corresponding to change of the refraction index of the side surface which is modified by the amount of the target substance), which is in contact with the biosensor.

The present invention provides a device for detection of a light modifying target substance. The device comprises at least one optical waveguide with a side surface. The side surface comprises a biosensor that is adapted to contact the target substance. Further, the device comprises a device for measuring light intensity. The device for measuring light intensity is positioned in the beam reflected by the side surface in order to detect an intensity of light. The intensity is dependent of the target substance in contact with the biosensor.

According to the invention, the term "optical waveguide" encompasses any flat, round, cubic or any other form of material which is transparent for light and which guides the light by total internal reflection along its side surface(s). The term "optical waveguide" is not restricted to glass, but also encompasses polymers or plastic. An optical waveguide in accordance with the invention can preferably be a flexible, transparent optical fiber made of glass (i.e. silica) or plastic. Light can be transmitted in the optical waveguide, especially from one front surface to the other front surface and thus transverse to the surface normal of side surface of the flat cubic optical waveguide. An optical fiber typically includes a transparent core which is surrounded by a cladding, the cladding material usually having a lower index of refraction. Light coupled into the optical fiber can be kept in the core by internal reflection.

According to the invention, the term "device for measuring light intensity" encompasses a device via which the intensity of light reflected/transmitted in the optical waveguide can be measured. Preferably, a light source is used which emits light having a specific wavelength.

According to the invention, the term "light modifying target substance" encompasses that incident light is "modified" by change of at least one optical property (reflection/transmission at a boundary) and/or emitting light after absorbing the incident light (fluorescence/phosphorescence). In the first mentioned case the target substance can attach to a boundary and the optical property (transmission/reflection) of the boundary (preferably the side surface of the optical waveguide) can be modified. In case the optical property relates to transmission/reflection of the boundary, the modification of the optical property can be determined by measuring the intensity of light transmitted/reflected by the boundary. In the second mentioned case the optical property with regard to the luminescence or phosphorescence is modified by the attached target substance; the light emission caused by the luminescence/phosphorescence/fluorescence can be measured.

According to the invention, the term "biosensor" encompasses an immobilized sensitive and/or reactive element, for example a biomolecule, which is able to attach to or react with a corresponding biomolecule or species of the fluid or sample. The terms "sensitive"/"reactive" encompasses that a simple attachment can take place and no chemical and/or biochemical reaction is required. Different reactive elements can be selectively immobilized on the side surface of the optical waveguide to form the biosensor. Preferably, the biosensor is in contact with the cleaned and plane side surface of the optical waveguide core. According to the invention, the biosensor is part of a reactive area of the side surface of the optical waveguide. It is not necessary that the whole side surface comprises the biosensor as long as a reactive area is formed on the side surface. Thus, the optical properties (for example transmission/reflection or luminescence/phosphorescence of a boundary) can change or is modified due to the attached target substance at the reactive area.

Preferably, the biosensor comprises an immobilized antigen, antibody, protein, oligo-nucleotide (for example RNA, DNA, PNA, LNA), aptamer, small organic molecule (such as estrone), nano particle, nano MIP (molecularly imprinted polymer), MIP or MOF (metal-organic framework). A molecularly imprinted polymer is a polymer that has been processed using the molecular imprinting technique which leaves cavities in polymer matrix with affinity to a chosen "template" molecule. Metal-organic frameworks comprise two components which are a metal ion or cluster and an organic molecule called linker for attachment with a target substance. The biosensor can comprise a biopolymer in which the antigen, antibody, protein, oligo-nucleotide, aptamer, nano particle, nano MIP, MIP or MOF can be immobilized. Polymers, such as polyethylene glycols or dextrans can be used on which the specific biomolecule can be immobilized.

Due to the biosensor at the side surface of the optical waveguide, a specific or "corresponding" target substance or biomolecule can be attached to or be brought in contact with the side surface of the optical waveguide. Due to the attachment or contact of the target substance or biomolecule, i.e. the contact of the target substance or biomolecule with the biosensor, the refraction index at the side surface can be modified as well as the optical and geometric thickness. The modification of the refraction index leads to a change in the intensity of light reflected by the interface at the side surface, i.e. at the boundary layer of optical waveguide-biosensor or biosensor-target substance.

In case the refraction index with the target substance is higher than the refraction index without the target substance, the intensity of a light beam reflected by the side surface will decrease with an increasing amount of target substance in contact with the biosensor. Thus, in this case the intensity of light coupled into the optical waveguide is decreased by the reflection at the side surface due to an increasing amount of target substance at the biosensor.

In case the refraction index with the target substance is lower than the refraction index without the target substance, the intensity of a light beam reflected by the side surface will increase with an increasing amount of target substance in contact with the biosensor. Thus, in this case the intensity of light coupled into the optical waveguide is increased by the reflection at the side surface due to an increasing amount of target substance at the biosensor.

As an additional measure, the wavelength of a light beam reflected at the side surface can be modified by a fluorophore or a phosphorescent material (for example a lanthanide) at the side surface of the optical waveguide. The fluorophore or phosphorescent material can be quenched. The light beam in the optical waveguide can be additionally absorbed by the fluorophore and re-emitted at a longer wavelength. The emitted fluorescence depends on the amount of target substance in contact with the biosensor. The fluorescence lifetime can be changed due to the amount of target in contact with the biosensor.

Due to the use of an optical waveguide, the device for detection of target substance is simpler and can especially be easily connected to an optical detector, which can in turn be the device for measuring the light intensity. Further, the optical waveguide can be easily replaced. The optical waveguide together with the biosensor attached to its side surface can be calibrated via a sample with a known concentration of the target substance. The (cleaned) calibrated optical waveguide with the biosensor can then be positioned into a fluid, especially a liquid, with unknown concentration of the target substance and the amount of free target substance can be determined. Using an optical waveguide allows for a high distance between the fluid of interest and the device for measuring intensity signals which in turn allows for a decoupled detection at places which are difficult to access. The term "decoupled" encompasses that the device for measuring light intensity does not have to be specifically geometrically aligned to the side surface.

The attachment can be reversible, i.e. the target substance in contact with the biosensor can be removed from the biosensor, e. g. by use of a cleaning fluid. According to the invention, "remove" encompasses not only the complete removal of target substance from the biosensor, but also the removal of the target substance such that the amount of target substance which is in contact with the biosensor is below a critical concentration.

According to a preferred embodiment, the optical waveguide is an optical fiber and a cladding of the optical fiber comprises the biosensor. The cladding can further comprise the fluorophore or phosphorescent material or particle(s). The use of an optical fiber is simple.

Preferably, a front surface of the optical waveguide is adapted to reflect a light beam in the optical waveguide. A light source and the device for measuring light intensity are positioned on the same end of the optical waveguide (adjacent to each other). In this case, the optical waveguide is operated in a reflective mode with a reflective end. Thus, a reflective layer, for example metal, can be located on a front surface of the optical waveguide, and the light intensity can be measured at the same end side of the optical waveguide as the end side on which the light for measurement is coupled into the optical waveguide. This embodiment allows for a simple measurement by placing the optical waveguide in the fluid of interest.

Alternatively, a light source and the device for measuring light intensity can be spaced apart at respective front surfaces of the optical waveguide allowing for a transmissive test setup. The light is coupled into the optical waveguide on one front surface and the light intensity of a beam transmitted to the other front surface is measured. This allows for a simple structure of the optical waveguide as an optical fiber.

Preferably, a filter device can be placed in front of the device for measuring light intensity to block light different from the light beam which was coupled into the optical waveguide. Thus, light which originates from a source different from the light source considered for the light intensity measurement is filtered if the wavelength is not identical/different to the wavelength of the light source. Further, it becomes possible that the fluorescence/phosphorescence light generated by the biosensor is detectable, such that the filter can block the excitation light which was coupled into the optical waveguide. In an alternative embodiment or as an additional measure, the filter device can comprise or consist of a lock-in (amplifier) that can extract a signal/light with a specific modulation (a signal with a known modulation) from a noisy environment. Therefore, due to the modulation and the subsequent signal processing by the lock-in, the signal-to-noise-ratio can be increased.

Preferably, at least two optical waveguides can be connected with each other. The at least two optical waveguides can each comprise one biosensor at the respective side surface, the two biosensors being different from each other, wherein a wavelength filter/polarisation filter is placed in front of the device for measuring light intensity for selective readout of the light intensity of a beam reflected at the respective side surface. Thus, more than one optical waveguide can be connected/merged into one optical waveguide (connected to the device for measuring light intensity) via a wavelength division multiplexer/ polarisation beam splitter and depending on the wavelength/polarisation, each signal of the side surface can be read out. Therefore, only one device for measuring light intensity can be used which can be coupled to the one optical waveguide into which all the optical waveguides (comprising the biosensors) merge.

In a preferred embodiment, the device for measuring light intensity is optically coupled to the optical waveguide. The term "optically coupled" encompasses a connection between the optical waveguide and the device for measuring light intensity which is selectively detachable, such that different optical fibers can be connected to the device for measuring intensity signals.

Other objects, features, advantages and aspects of the present application will become apparent to those skilled in the art from the following description and appended claims. It should be understood, however, that the following description, appended claims, and specific examples, while indicating preferred embodiments of the application, are given by way of illustration only. Various changes and modifications within the spirit and scope of the disclosed invention will become readily apparent to those skilled in the art reading the following.

Examples of the invention will now be described with reference to the accompanying drawings in which:
Figure 1 shows an optical waveguide with a biosensor according to the teachings of the present invention in a reflective mode.
Figure 2 shows an optical waveguide with a biosensor according to the teaching of the present invention in a transmittive mode.
Figure 3a, b schematically shows a dependency of the intensity of light as a function of target substance quantity.

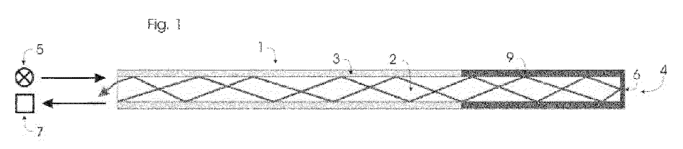

Figure 1 shows the main elements of the device according to the invention. An optical waveguide 1, formed as an optical fiber, is depicted, which has a core 2, a side surface 3 (cladding), and a front surface 4. On the side surface 3 of the optical waveguide 1, a biosensor is arranged on the area indicated by 9. The side surface 3 comprises a sensitive area for a target substance depending on the biosensor used.

Light emitted from a light source 5 is coupled into the optical waveguide 1. At the front surface 4 of the embodiment shown in Figure 1, the light beam is reflected because of a reflective end 6 formed on the front surface 4 of the optical waveguide 1. The light intensity of the beam coupled into the optical waveguide 1 and being reflected by the side surface 3 and the front surface 4 can be measured by a device for measuring light intensity 7, which can be configured as a photodiode. The device for measuring light intensity 7 is positioned at the same front end as the light source 5. The light source 5 and the device for measuring light intensity 7 can form a unit.

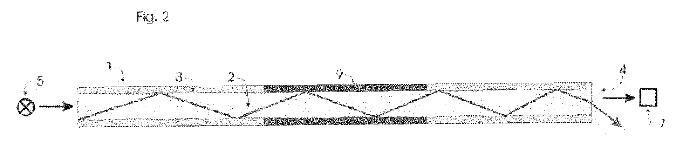

In Figure 2, a transmissive setup of the device according to the invention is shown. Contrary to the setup of Figure 1, the front end surface 4 of the optical fiber 1 does not comprise a reflective end.

Light emitted from the light source 5 is coupled into the optical waveguide 1 from one end surface and the intensity of the light beam coupled into the optical waveguide reflected by the side surface 3 is measured by the device for measuring light intensity 7. The device for measuring light intensity 7 is positioned at the front end 4.

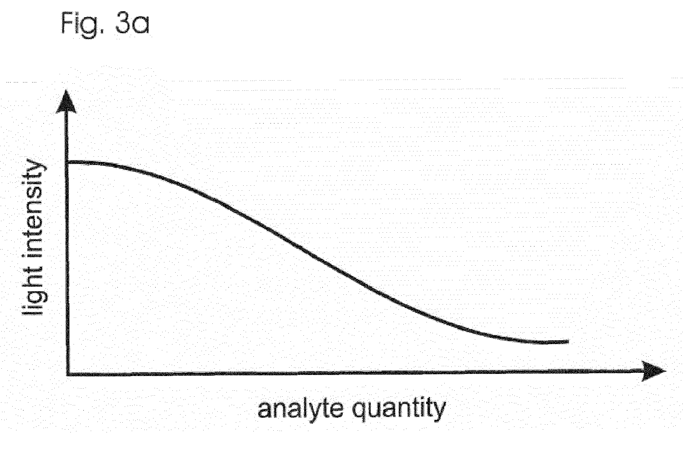

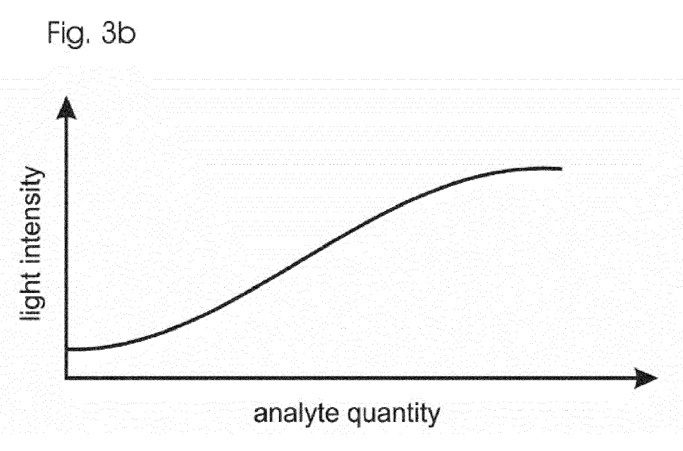

Figure 3 schematically shows the light intensity as a function of target substance quantity in contact with the biosensor. Figure 3a shows the dependency in case the refraction index of the biosensor in contact with the target substance is higher than the refraction index of the biosensor without a target substance. Figure 3a shows that the intensity decreases as the amount of target substance increases.

Figure 3b shows the dependency in case the refraction index of the biosensor in contact with the target substance is lower than the refraction index of the biosensor without target substance. Figure 3b shows that the intensity increases with increase of target substance.

The dependency shown in Figure 3a and 3b can be used to determine the quantity of target substance in a fluid of interest. The light intensity can be measured and the target substance quantity can be read. The optical waveguide 1 can be calibrated with a fluidic sample comprising a pre-determined concentration of target substance.

## Claims

1. Device for detection of a light modifying target substance, the device comprising
a. at least one optical waveguide (1) with a side surface (3), the side surface (3) comprising a biosensor that is adapted to contact the target substance,
b. a device for measuring light intensity (7), the device (7) being positioned in a beam reflected by the side surface (3) in order to detect an intensity of light, modified by the target substance in contact with the biosensor.

2. Device according to claim 1, **wherein** the side surface (3) further comprises a fluorophore or a phosphorescent material.

3. Device according to claim 1 or 2, **wherein** the optical waveguide (1) is an optical fiber and a cladding of the optical fiber (1) comprises the biosensor.

4. Device according to any one of claims 1 to 3, **wherein** the biosensor comprises an immobilized antigen, antibody, protein, oligo-nucleotide, aptamer, nano particle, nano MIP, MIP or MOF.

5. Device according to any one of claims 1 to 4, **wherein** the side surface (3) is adapted such that the biosensor remains on the side surface (3) and that the target substance is at partly removable via a cleaning fluid.

6. Device according to any one of claims 1 to 5, **wherein** a front surface (4) of the optical waveguide (1) is adapted to reflect a light beam in the optical waveguide (1), and wherein a light source (5) and the device for measuring light intensity (7) are positioned adjacent to each other.

7. Device according to claim 6, **wherein** the light source (5) and the device for measuring light intensity (7) form one unit.

8. Device according to any one of claims 1 to 5, **wherein** a light source (5) and the device for measuring light intensity (7) are spaced apart and the device for measuring light intensity (7) is positioned at one front surface of the optical waveguide (1).

9. Device according to any one of claims 1 to 8, **wherein** a filter is provided to block excitation light and transmit emitted light of fluorophore and/or phosphorescent material.

10. Device according to claim 9, **wherein** a lock-in is provided to filter light with pre-determined modulation.

11. Device according to any one of claims 1 to 8, **wherein** more than one optical waveguide (1) is provided, each of which comprises at a side surface (3) a biosensor, the biosensors being different from each other, wherein a wavelength division multiplexer/polarisation beam splitter for readout of the light intensity of a beam reflected at the side surface (3) is placed ahead the device for measuring light intensity (7).

12. Method for detection of a light modifying target substance, **wherein** an optical waveguide (1) with a side surface (3) comprising a biosensor is positioned in a fluid, light is coupled into the optical waveguide (1), and light intensity of a beam reflected in the optical waveguide (1) at the biosensor is measured.

13. Method according to claim 12, **wherein** the light intensity signal of the optical waveguide (1) is calibrated in a fluid with pre-determined concentration of target substance.

14. Method according to claim 12 or 13, **wherein** at least two side surfaces (3) with different biosensors are used and the light intensity is determined by using a wavelength division multiplexer/polarization beam splitter for readout of the light intensity of a beam reflected by the respective side surface (3).

15. Use of an optical waveguide (1) for detection of a light modifying target substance, **wherein** the optical waveguide (1) comprises a side surface with a biosensor, which is adapted to contact the target substance, wherein via a device for measuring light intensity (7) the light intensity of a beam reflected at the biosensor on the side surface (3) is detectable.

16. Use of an optical waveguide (1) according to claim 15, **wherein** the side surface (3) is adapted to bind a fluorophore and/or phosphorescent material.
